# EUROPÄISCHE PATENTSCHRIFT

(11) **EP 2 915 775 B1**
(45) Veröffentlichungstag und Bekanntmachung des Hinweises auf die Patenterteilung: **09.11.2016**
(21) Anmeldenummer: 15157986.9
(22) Anmeldetag: 06.03.2015
(51) Int. Cl.: B67C 3/28

(54) **Vorrichtung und Verfahren zum Befüllen eines Behälters mit einem Füllprodukt**
Device and method for filling a container with a filling product
Dispositif et procédé de remplissage d'un récipient avec un produit de remplissage

(30) Priorität: 06.03.2014 DE 102014102958
(43) Veröffentlichungstag der Anmeldung: 09.09.2015
(73) Patentinhaber: Krones AG, 93073 Neutraubling (DE)
(72) Erfinder: Angerer, Florian, 93073 Neutraubling (DE); Doblinger, Josef, 93073 Neutraubling (DE)
(74) Vertreter: Nordmeyer, Philipp Werner

(56) Entgegenhaltungen:
- EP-A1- 1 762 539
- EP-A1- 2 676 920
- DE-A1- 19 640 673
- DE-A1-102012 211 926
- US-A- 1 531 007

## Beschreibung

### Technisches Gebiet

Die vorliegende Erfindung betrifft eine Vorrichtung sowie ein Verfahren zum Befüllen eines Behälters mit einem Füllprodukt, bevorzugt zum Befüllen eines Behälters mit einem Getränk in einer Getränkeabfüllanlage.

### Stand der Technik

Zum Befüllen von Behältern mit einem Füllprodukt, beispielsweise in einer Getränkeabfüllanlage, ist es bekannt, entsprechende Füllorgane zu verwenden, welche üblicherweise oberhalb der zu befüllenden Behälter angeordnet sind und welche unter anderem den Füllproduktstrom in den Behälter mittels eines entsprechenden Produktventils steuern. Ein Produktventil, welches beispielsweise in einem Füllorgan aufgenommen ist, umfasst üblicherweise einen relativ zu einem Ventilsitz beweglichen Ventilkörper, welcher, wenn er fest im Ventilsitz aufgenommen ist, den Durchfluss des Füllproduktes blockiert und, wenn er aus dem Ventilsitz herausgehoben ist, ein Herausströmen des über dem Produktventil anstehenden Füllproduktes ermöglicht.

Die Bewegung des Ventilkörpers relativ zum Ventilsitz wird üblicherweise pneumatisch angesteuert. Die bekannten pneumatischen Antriebe lassen dabei lediglich zwei Schaltstellungen zu, nämlich eine vollständig geschlossene und eine vollständig geöffnete Schaltstellung. Entsprechend kann der in den Behälter einströmende Füllproduktstrom nur entweder eingeschaltet oder ausgeschaltet werden.

Zu Beginn eines Füllvorganges jedoch ist es bevorzugt, zunächst den Boden des zu befüllenden Behälters langsam mit dem Füllprodukt zu beaufschlagen, um eine übermäßige Schaumbildung zu verhindern. Weiterhin ist es bevorzugt, zum Ende des Füllvorganges hin ein langsameres Einströmen des Füllproduktes zu erreichen, da durch die üblicherweise schmalere Behälterform im *Geänderte Beschreibungsseite auf Mitteilung nach R69 EPÜ*
oberen Bereich des Behälters der Füllproduktspiegel sonst zu schnell ansteigt und entsprechend ein Spritzen von Füllprodukt auftreten kann.

Entsprechend wurde bereits in der EP 1 151 218 B1 eine Vorrichtung gemäß dem Oberbegriff des Anspruchs 1 sowie ein entkeimbares Ventil zur Regelung des Durchflusses eines Fluides in einem Kreislauf beschrieben, welches elektromagnetisch angesteuert wird und mittels welchem neben einer vollständig geöffneten und einer vollständig geschlossenen Stellung eine Zwischenstellung des Ventils möglich ist. Entsprechend kann hier mittels einer elektromagnetischen Ansteuerung eines Produktventils zwischen zwei unterschiedlichen Füllproduktströmen umgeschaltet werden.

Weiterhin kann in herkömmlichen Füllorganen, welche beispielsweise mit pneumatisch betriebenen Ventilen arbeiten, eine Umstellung des jeweils in den zu befüllenden Behälter einfließenden Füllproduktstromes durch das Zuschalten beziehungsweise Wegschalten zusätzlicher Produktwege erreicht werden. Entsprechend kann auch durch Anwendung zweier oder mehrerer Pneumatikventile, welche unterschiedliche Produktwege zusammenschalten können, eine Einstellung unterschiedlicher Produktvolumina erreicht werden.

Weiterhin ist aus der EP 1 281 016 B1 ein magnetisch steuerbares Ventil bekannt, bei welchem durch das Vorsehen von zwei Nutzabschnitten verschiedener Querschnitte zwei unterschiedliche Durchflussgeschwindigkeiten eingestellt werden können.

Auch aus der EP 1 156 980 B1 und EP 1 762 539 A1 ist jeweils eine Vorrichtung zum Füllen von Behältern mit einem Ventil zur Einstellung zweier diskreter Durchflüsse bekannt.

### Darstellung der Erfindung

Ausgehend von dem bekannten Stand der Technik ist es eine Aufgabe der vorliegenden Erfindung, eine Vorrichtung sowie ein Verfahren zum Befüllen eines Behälters mit einem Füllprodukt anzugeben, welche ein weiter verbessertes Füllverhalten ermöglichen.

Diese Aufgabe wird mit einer Vorrichtung zum Befüllen eines Behälters mit einem Füllprodukt mit den Merkmalen des Anspruchs 1 gelöst. Vorteilhafte Weiterbildungen ergeben sich aus den Unteransprüchen.

Entsprechend wird eine Vorrichtung zum Befüllen eines Behälters mit einem Füllprodukt, bevorzugt zum Befüllen eines Behälters mit einem Getränk in einer Getränkeabfüllanlage, vorgeschlagen, umfassend ein Produktventil mit einem relativ zu einem Ventilsitz beweglichen Ventilkörper zum Steuern des Füllproduktstromes in den zu befüllenden Behälter, und einen ersten magnetischen Antrieb zur Positionierung des Ventilkörpers in einer geöffneten Position. Erfindungsgemäß ist ein zweiter magnetischer Antrieb zur kontinuierlichen Positionierung des Ventilkörpers vorgesehen. Unterschiedliche Füllproduktströme können entsprechend durch die variable Positionierung des Ventilkörpers relativ zum Ventilsitz eingestellt werden.

Dadurch, dass ein zweiter magnetischer Antrieb zur kontinuierlichen Positionierung des Ventilkörpers vorgesehen ist, kann, ausgehend von der mit dem ersten magnetischen Antrieb erreichten geöffneten Position, ein kontinuierliches Variieren des Füllproduktstroms erreicht werden. So kann beispielsweise, wenn der Ventilkörper durch den ersten magnetischen Antrieb in eine vollständig geöffnete Position gebracht wurde, mit dem zweiten Antrieb ein kontinuierliches Verändern des Produktstroms bis hin zurück in eine geschlossene Position erreicht werden. Entsprechend kann eine variable und stetige Füllproduktkurve ohne Sprünge gesteuert werden.

Darüber hinaus ist es mittels des ersten Magnetantriebes möglich, den Ventilkörper in eine geöffnete Position zu bringen und durch eine entsprechende Auslegung des Arbeitspunktes hohe Schließkräfte bereitzustellen, welche für ein sicheres Verschließen des Produktventils sorgen. Dabei wird mittels des zweiten magnetischen Antriebs eine hohe Variabilität des Füllproduktstroms bereitgestellt. Bevorzugt ist der zweite magnetische Antrieb daher zur Positionierung des Ventilkörpers ausgehend von der geöffneten Position des ersten magnetischen Antriebs ausgebildet.

In einer vorteilhaften Weiterbildung weist der zweite magnetische Antrieb einen Läufer auf, welcher im Wirkbereich einer magnetischen Spule angeordnet ist, besonders bevorzugt konzentrisch zu der magnetischen Spule angeordnet ist, sowie eine auf den Läufer wirkende Rückstellfeder aufweist, welche den Läufer bevorzugt in die geöffnete Position des ersten magnetischen Antriebs vorspannt. Damit kann der Ventilkörper ausgehend von der geöffneten Position und entgegen der Vorspannkraft der Rückstellfeder durch den zweiten Antrieb kontinuierlich positioniert werden und damit einen beliebigen Füllproduktstrom einstellen.

Eine einfache kontinuierliche Einstellung der Position des Ventilkörpers durch den zweiten magnetischen Antrieb kann dadurch erreicht werden, dass der zweite magnetische Antrieb als Proportionalantrieb ausgebildet ist. Damit entspricht eine mit dem zweiten magnetischen Antrieb anfahrbare Position beispielsweise einem dem zweiten magnetischen Antrieb zugeführten Strom, so dass über eine einfache Stromsteuerung eine variable Positionierung und damit ein variabler Füllproduktstrom erreicht werden kann.

Bevorzugt stellt der erste magnetische Antrieb genau zwei diskrete Positionen bereit, besonders bevorzugt die geöffnete Position sowie eine geschlossene Position, in welcher das Produktventil geschlossen ist. Der erste magnetische Antrieb kann damit anders ausgelegt werden, als der zweite magnetische Antrieb und kann insbesondere zur Ausüben wesentlich höherer Schaltkräfte ausgelegt sein. Auf diese Weise kann ein vollständiges Verschließen des Produktventils unter Aufbringen einer hohen Verschließkraft erreicht werden, so dass ein sicheres Verschließen erreicht wird.

In einer bevorzugten Ausbildung weist der erste magnetische Antrieb einen Läufer auf, welcher im Wirkbereich einer magnetischen Spule angeordnet ist, bevorzugt konzentrisch zu der magnetischen Spule angeordnet ist, sowie eine auf den Läufer wirkende Vorspannfeder, welche den Läufer bevorzugt in die geschlossene Position des Produktventils vorspannt. Die Vorspannfeder ist besonders bevorzugt so ausgebildet, dass sie die gewünschte hohe Verschließkraft bereitstellen kann. In der geöffneten Position, in welcher der Läufer dann von der magnetischen Spule vollständig angezogen ist, kann aufgrund der hohen Haltekräfte eine geringe Energieaufnahme erreicht werden. Damit ist aufgrund der Vorspannung der Vorspannfeder in der Verschlussposition keinerlei Energieaufnahme, und in der geöffneten Position nur eine geringe Energieaufnahme zu verzeichnen.

Um entsprechend ein sicheres Schließen des Produktventils zu erreichen sind die Vorspannfeder des ersten magnetischen Antriebes und die Rückstellfeder des zweiten magnetischen Antriebes bevorzugt in entgegensetzte Richtungen vorgespannt. Dabei ist besonders bevorzugt die Vorspannfeder des ersten magnetischen Antriebes stärker, als die Rückstellfeder des zweiten magnetischen Antriebes.

Bevorzugt ermöglicht der erste magnetische Antrieb ein vollständiges Öffnen des Produktventils und mittels des zweiten magnetischen Antriebs ist der Ventilkörper ausgehend von der vollständig geöffneten Position kontinuierlich positionierbar und ist bevorzugt in eine weiter geschlossene Position bewegbar.

In einer Variante ermöglicht der erste magnetische Antrieb ein Öffnen des Produktventils in eine Zwischenposition und mittels des zweiten magnetischen Antriebs ist der Ventilkörper ausgehend von dieser Zwischenposition kontinuierlich positionierbar und bevorzugt kontinuierlich in eine weiter geöffnete Position bewegbar.

In einer Weiterbildung kann der erste magnetische Antrieb den Ventilkörper von der geschlossenen Position in eine Zwischenöffnungsstellung führen, von der aus mittels des kontinuierlichen zweiten Magnetantriebes dann ein vollständiges Öffnen beziehungsweise auch vollständiges Verschließen des Produktventils in variabler Weise möglich ist. Über den ersten Magnetantrieb können hier wiederum die hohen benötigten Schließkräfte zum sicheren Verschließen des Produktventils bereitgestellt werden.

Der zweite magnetische Antrieb zur kontinuierlichen Bewegung des Ventilkörpers ist bevorzugt ein Proportionalantrieb, mittels welchem eine beliebige Position des Ventilkörpers, ausgehend von der über den ersten Magnetantrieb eingestellten geöffneten Position, angefahren werden kann. Entsprechend ist eine kontinuierliche Positionierung des Produktventilkörpers bezüglich des Produktventilsitzes möglich, so dass entsprechend der Füllproduktstrom, welcher durch das Produktventil ausgegeben wird, variabel eingestellt werden kann. Die aus dem Stand der Technik bekannte Vorgabe von ein bis zwei diskreten Ventilstellungen wird auf diese Weise überwunden, wobei gleichzeitig ein sicheres Verschließen des Produktventils mittels des ersten magnetischen Antriebes möglich ist, so dass ein sicherer und zuverlässiger Betrieb der Vorrichtung erreicht wird.

Aufgrund der Möglichkeit, mittels des zweiten magnetischen Antriebes den Produktventilkörper kontinuierlich zu positionieren, ergibt sich die Möglichkeit, stetig verlaufende Füllkurven für eine bestimmte Kombination aus Füllprodukt und Behälter vorzugeben, welche dann exakt nachgefahren werden können. Im Stand der Technik war es durch die Vorgabe von ein bis zwei diskreten unterschiedlichen Füllproduktströmen nur möglich, zu einem bestimmten Zeitpunkt von einer mittleren Ventilöffnung zu einer vollständigen Ventilöffnung und nach Erreichen eines bestimmten Füllzustands von der vollständigen Ventilöffnung wieder zurück zur mittleren Ventilöffnung und dann zum Verschluss des Produktventils zu schalten, also diskontinuierliche Füllkurven mit Sprungstellen abzufahren. Durch die Möglichkeit, die Füllproduktkurve jedoch kontinuierlich und stetig einzustellen, können die Effizienznachteile beim Umschalten zwischen diskreten Werten vermieden werden. Insgesamt kann die Füllerleistung beispielsweise dadurch erhöht werden, dass zwischen dem ersten Zeitpunkt und dem zweiten Zeitpunkt eine stetige Variation des Füllproduktstromes durchfahren wird und beispielsweise ein lineares Erhöhen des Produktstromes möglich ist.

Um zu erreichen, dass mittels des ersten magnetischen Antriebs ein sicheres Verschließen sowie das Erreichen einer vordefinierten Öffnungsposition erreicht werden kann, ist der erste magnetische Antrieb bevorzugt als ein solcher ausgebildet, welcher genau zwei diskrete Positionen bereitstellt. Entsprechend können hier hohe Schaltkräfte aufgebracht werden, welche es ermöglichen, zwischen den beiden Schaltposition hin und her zu schalten, nämlich zwischen der vollständig geschlossenen Position und der ersten Öffnungsposition.

Der erste magnetische Antrieb kann dabei in der ersten Öffnungsposition entweder eine vollständig geöffnete Position anfahren, oder aber eine Zwischenposition. Dieser Schaltvorgang kann aufgrund der Auslegung des Arbeitspunkts des ersten magnetischen Antriebs relativ schnell durchgeführt werden.

Abhängig davon, ob der erste Antrieb eine vollständig geöffnete Position anfährt, oder eine Zwischenposition anfährt, wird über den zweiten magnetischen Antrieb entweder ein additiver oder ein subtraktiver Betrieb ermöglicht. Beim Anfahren einer vollständig geöffneten Position mittels des ersten magnetischen Antriebes wird über den zweiten magnetischen Antrieb eine kontinuierliche, substraktive Bewegung des Ventilkörpers aus der vollständig geöffneten ersten Position zurück in eine weiter geschlossene, bevorzugt bis zur vollständig geschlossenen Position des Produktventils möglicher Verfahrweg angefahren.

Beim Schalten des Ventilkörpers derart, dass er vom ersten magnetischen Antrieb in eine Zwischenposition gefahren wird, wird bevorzugt ein additiver Betrieb der zweiten magnetischen Vorrichtung erreicht, derart, dass mittels des Aufbringens der zusätzlichen Bewegung über den zweiten mechanischen Antrieb ein Verfahren des Ventilkörpers weiter in Richtung vollständiger Öffnungsposition erreicht wird, derart, dass das Produktventil zwischen der von dem ersten magnetischen Antrieb angefahrenen Zwischenposition bis hin zur vollständig geöffneten Position ermöglicht wird.

Der erste magnetische Antrieb ist dabei bevorzugt in Form eines Hubmagneten ausgebildet, welcher in einem Bereich derart betrieben wird, das entweder die erste geöffnete Position oder die vollständig geschlossene Position durch einen voll angezogenen beziehungsweise einen mittels einer entsprechenden Feder zurückgestellten Position entspricht. Vorteilhaft bei der Verwendung eines solchen Hubmagneten, der in einer voll angezogenen Position beziehungsweise einer durch eine Rückstellfeder vollständig rückgestellte Position betrieben wird, ist, dass im voll angezogenen Betrieb die Haltekraft sehr hoch ist, derart, dass der benötigte Haltestrom nur bei etwa 5% des maximalen Anzugsstromes liegt. Entsprechend kann der erste magnetische Antrieb in einer voll angezogenen Position in dieser Position unter Aufwendung eines geringen Haltestromes gehalten werden. In der entgegengesetzten Position, welche durch eine entsprechende Rückstellung durch die Vorspannfeder erreicht wird, ist entsprechend überhaupt keine Beströmung des magnetischen Antriebs vonnöten. Auf diese Weise ergibt sich, dass in beiden Positionen, also der vollständig geschlossenen Position sowie der ersten geöffneten Position zum Halten dieser Positionen nur ein sehr geringer oder gar kein Energieaufwand von Nöten ist.

Entsprechend wird der Arbeitspunkt des ersten magnetischen Antriebes, welcher entsprechend eine Kombination eines Elektromagneten mit einer Vorspannfeder aufweist, so gelegt, dass die erste Position des ersten magnetischen Antriebes im voll angezogenen Bereich und die zweite Position des ersten magnetischen Antriebes in einem durch die Federspannung vorgegebenen Bereich liegt.

Der zweite magnetische Antrieb hingegen ist bevorzugt ebenfalls als Kombination aus einer elektrischen Spule, welche auf einen entsprechenden Läufer wirkt, vorgesehen, wobei jedoch der Arbeitspunkt entlang der Antriebskennlinie weiter abwärts in einem flacheren Bereich der Kennlinie liegt, derart, dass über die Stellung des Spulenstromes unterschiedliche Arbeitspunkte zwischen Antrieb und der entgegenwirkenden Rückstellfeder erreicht werden, so dass eine proportionale Positionierung des Läufers erreicht werden kann.

In einer besonders bevorzugten Variante sind dem Läufer zugewendete und ihn bevorzugt kontaktierende Stege an der magnetischen Spule vorgesehen, welche den Luftspalt zwischen der magnetischen Spule und dem Läufer überbrücken und welche dazu dienen, die Magnetfeldlinien zu führen. Die aufgebrachten Haltekräfte in der vollständig angezogenen Position können so noch weiter erhöht werden, derart, dass der benötigte Haltestrom noch weiter abgesenkt werden kann. Um einen einfachen Austausch einer möglicherweise defekten Vorrichtung beziehungsweise eines defekten Füllorgans zu erleichtern, ist eine Steuerelektronik zur Ansteuerung des ersten magnetischen Antriebes und/oder des zweiten magnetischen Antriebes bevorzugt in einem Gehäuse der Vorrichtung aufgenommen. Dadurch kann die gesamte Einheit getauscht werden und eine aufwändige Fehlersuche beispielsweise in einem Steuerschrank entfällt. Das ausgetauschte Füllorgan ist sofort wieder einsetzbar.

Die oben genannte Aufgabe wird weiterhin durch ein Verfahren mit den Merkmalen des Anspruchs 12 gelöst. Vorteilhafte Weiterbildungen ergeben sich aus den Unteransprüchen.

Entsprechend wird ein Verfahren zum Befüllen eines Behälters mit einem Füllprodukt, bevorzugt zum Befüllen eines Behälters mit einem Getränk in einer Getränkeabfüllanlage, vorgeschlagen, umfassend das Betätigen eines Produktventils mit einem relativ zu einem Ventilsitz beweglichen Ventilkörper um Steuern des Füllproduktstromes in den zu befüllenden Behälter, wobei der Ventilkörper mittels eines ersten magnetischen Antriebes in eine geöffnete Position gebracht wird. Erfindungsgemäß wird der Ventilkörper mittels eines zweiten magnetischen Antriebes kontinuierlich positioniert.

Besonders bevorzugt wird eine vorgegebene Füllproduktstromkurve, insbesondere mit stetig ansteigenden beziehungsweise stetig abfallenden Füllproduktströmen, zur Befüllung des Behälters durchfahren.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Schnittdarstellung durch eine Vorrichtung zum Befüllen eines Behälters mit einem Füllprodukt in einer ersten Ausbildung;
- Figur 2: eine schematische Darstellung des Bewegungsprofils der Vorrichtung gemäß Figur 1;
- Figur 3: eine schematische Schnittdarstellung durch eine Vorrichtung zum Befüllen eines Behälters mit einem Füllprodukt in einer weiteren Ausführungsform;
- Figur 4: eine schematische Darstellung des Bewegungsprofils der Vorrichtung gemäß Figur 3;
- Figur 5: eine schematische Darstellung einer Füllkurve;
- Figur 6: eine schematische Darstellung eines Kraft-Weg Diagramms des ersten magnetischen Antriebes; und
- Figur 7: eine schematische Darstellung eines Kraft-Weg Diagramms eines zweiten magnetischen Antriebs.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

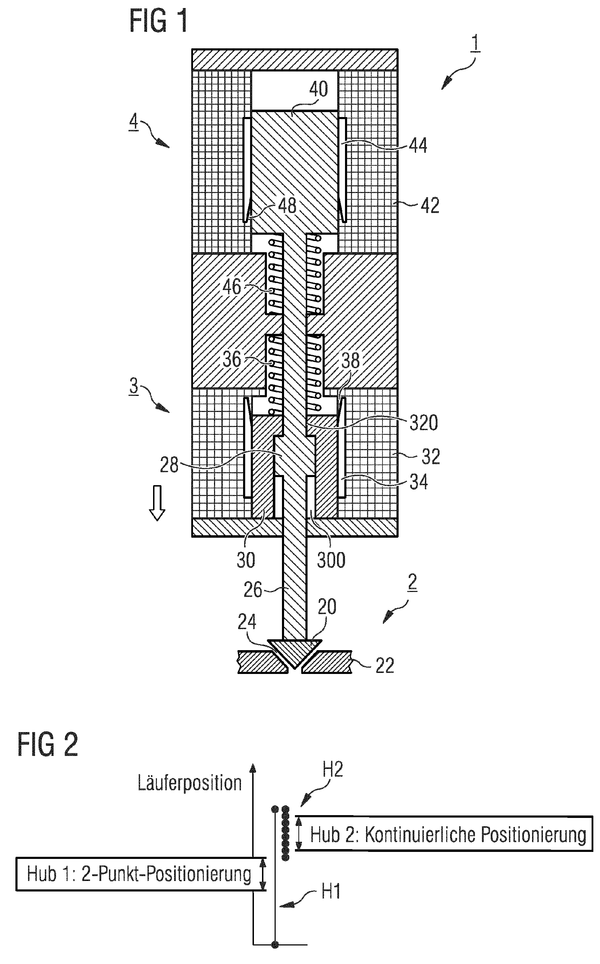

Figur 1 zeigt schematisch eine Vorrichtung 1 zum Befüllen eines in der Figur nicht gezeigten Behälters mit einem Füllprodukt. Die Vorrichtung 1 ist beispielsweise in Form eines Füllorganes einer Getränkeabfüllanlage vorgesehen, welches vielfach in einem Rundläuferfüller in einer Getränkeabfüllanlage vorgesehen sein kann. Üblicherweise ist eine Mehrzahl von Füllorganen entsprechend der Maschinenteilung eines Rundläuferfüllers vorgesehen, wobei jedes einzelne Füllorgan dazu dient, einen darunter angeordneten und zu befüllenden Behälter mit dem Füllprodukt zu befüllen.

Ein Produktventil 2 ist vorgesehen, welches einen schematisch angedeuteten Ventilkörper 20 aufweist, welcher in einem ebenfalls schematisch angedeuteten Ventilsitz 22 aufgenommen wird, um entsprechend eine Auslauföffnung 24, durch welche hindurch das Füllprodukt in den zu befüllenden Behälter ausläuft, zu öffnen beziehungsweise zu verschließen.

Mittels einer kontinuierlichen Positionierung des Ventilkörpers 20 kann der durch das Produktventil 2 strömende Füllproduktstrom variiert und eingestellt werden. Das Bereitstellen unterschiedlicher Füllproduktströme kann den Befüllvorgang verbessern und effizienter gestalten, da üblicherweise der Behälterquerschnitt über die Füllhöhe des Behälters hinweg variiert und die Fallhöhe des Füllprodukts über den Füllvorgang hinweg abnimmt. Unter Berücksichtigung der Produkteigenschaften, beispielsweise der Aufschäumneigung des Produkts, kann so eine optimale Füllkurve eingestellt werden, die ein schnelles Füllen bei minimiertem Aufschäumen und Spritzen ermöglicht.

Unter kontinuierlicher Positionierung wird verstanden, dass der Ventilkörper 20 innerhalb eines vorgegebenen Bereichs in einer beliebigen Position bezüglich des Ventilsitzes 22 angeordnet werden kann, so dass variable Füllproduktströme eingestellt werden können.

Der Ventilkörper 20 ist über ein Gestänge 26 mit einem ersten magnetischen Antrieb 3 und einem zweiten magnetischen Antrieb 4 verbunden. Das Gestänge 26 ist in der gezeigten Ausführungsform durchgehend sowohl mit dem ersten magnetischen Antrieb 3 als auch dem zweiten magnetischen Antrieb 4 verbunden, so dass sowohl der erste magnetische Antrieb 3 als auch der zweite magnetische Antrieb 4 getrennt oder gemeinsam auf das Gestänge 26 wirken können.

Der erste magnetische Antrieb 3 umfasst einen Läufer 30, welcher als weichmagnetischer Läufer ausgebildet ist, und welcher konzentrisch zu einer Spule 32 mit einem entsprechenden Weicheisenkern angeordnet ist. Zwischen der Spule 32 und dem Läufer 30 ist ein Luftspalt 34 angeordnet. Die Spule 32 dient dazu, den Läufer 30 entgegen der Pfeilrichtung anzuziehen, um den Läufer 30 von der in Figur 1 gezeigten geschlossenen Position in eine geöffnete Position entgegen der Pfeilrichtung zu bewegen. Der Läufer 30 ist dabei über eine Vorspannfeder 36 in die geschlossene Position vorgespannt. Entsprechend muss zum Bewegen des Läufers 30 von der geschlossenen Position in die geöffnete Position die Vorspannkraft der Vorspannfeder 36 durch den ersten magnetischen Antrieb 3 überwunden werden.

Der Läufer 30 ist in dem gezeigten Ausführungsbeispiel mit einem Hohlraum 300 versehen, wobei das Gestänge 26 über einen Flansch 28 in den Hohlraum 300 des Läufers 30 eingreift. Entsprechend wird, da die Durchgangsbohrung 320 im Läufer 30 nur den Gestängedurchmesser des Gestänges 26 aufnimmt, nicht aber den Flanschdurchmesser des Flansches 28, durch ein Halten des Läufers 30 in der geschlossenen Position, so wie sie in Figur 1 gezeigt ist, eine entsprechende Vorspannkraft über die Vorspannfeder 36 vom Läufer 30 auf den Flansch 28 aufgebracht, so dass das Produktventil 2 fest verschlossen bleibt und insbesondere der Ventilkörper 20 in den Ventilsitz 22 eingepresst wird. Der Läufer 30 nimmt das Gestänge 26 entsprechend nur in einer Richtung mit, in der anderen Richtung hingegen ist das Gestänge 26 frei beweglich.

Beim Bestromen der magnetischen Spule 32 mit einem entsprechenden Strom wird der Läufer 30 entgegen der Kraft der Vorspannfeder 36 entgegen der Pfeilrichtung bewegt, so dass die Vorspannkraft nicht mehr auf den Flansch 28 des Gestänges 26 aufgebracht wird und entsprechend der Läufer 30 den Ventilkörper 20 nicht mehr in der geschlossenen Position hält. Damit wird der Ventilkörper 20 aus dem Ventilsitz 22 unter anderem aufgrund der Vorspannkraft einer Rückstellfeder 46 des zweiten magnetischen Antriebes 4 herausgehoben.

Stege 38 sind im Luftspalt 34 vorgesehen, welche den Luftspalt überbrücken und welche die Magnetfeldlinien beim Ansteuern des Antriebes 3 besser führen, derart, dass ein positiver Effekt auf die Anzugskraft erreicht werden kann. Entsprechend kann, wenn der Läufer 30 durch die magnetische Spule 32 angezogen ist, der Haltestrom abgesenkt werden, da die Haltekraft im vollständig angezogenen Betrieb sehr hoch ist.

Durch ein entsprechendes Abschalten des durch die Spule 32 fließenden Stromes wird der Läufer 30 dann wieder aufgrund der Vorspannkraft der Vorspannfeder 36 in die vollständig geschlossene Position gezwungen, wobei die Vorspannkraft über den Flansch 28 auf das Gestänge 26 und damit auf den Ventilkörper 20 übertragen wird, welcher dann fest in den Ventilsitz 22 gepresst wird.

Entsprechend kann mittels des ersten magnetischen Antriebes 3 entweder eine vollständig geöffnete oder eine vollständig geschlossene Position des Produktventils 2 angefahren werden.

Der zweite magnetische Antrieb 4 umfasst einen weiteren Läufer 40, welcher konzentrisch von einer magnetischen Spule 42 umgeben ist, wobei sich zwischen der magnetischen Spule 42 und dem Läufer 40 ein Luftspalt 44 befindet. Die bereits genannte Rückstellfeder 46 sorgt für eine Vorspannung des Läufers 40 in eine vollständig geöffnete Richtung. Die Federspannung der Rückstellfeder 46 ist bevorzugt deutlich geringer, als die Federspannung der Vorspannfeder 36 des ersten magnetischen Antriebs 3. Wenn die Federspannung der Vorspannfeder 36 des ersten magnetischen Antriebs 3 durch das Bestromen der Spule 32 und das daraus resultierende Bewegen des Läufers 30 in die geöffnete Position entkoppelt ist, kann die Rückstellfeder 46 des zweiten magnetischen Antriebs 4 den Läufer 40 entsprechend problemlos in die vollständig geöffnete Position schieben.

Der Läufer 40 kann dann durch kontinuierliche Veränderung des die magnetische Spule 42 beaufschlagenden Stromes gegen die Vorspannung der Rückstellfeder 46 wieder in Pfeilrichtung, also in Schließrichtung, eingeschoben werden. Hierzu sind den Luftspalt 44 überbrückende Stege 48 vorgesehen, welche das Anzugsverhalten des Läufers 40 verbessern, da die Magnetfeldlinien entsprechend direkter an den Läufer 40 herangeführt werden.

Der zweite magnetische Antrieb 4 kann eine kontinuierliche Positionierung des Ventilkörpers 20 von der vollständig geöffneten Position aus dahingehend durchführen, dass bei steigenden, die magnetische Spule 42 beaufschlagenden Strömen der Läufer 40 immer weiter angezogen wird, wodurch der Ventilkörper 20 in den Ventilsitz 22 immer weiter abgesenkt wird. Durch eine kontinuierliche Einstellung des Spulenstroms der Spule 42 kann entsprechend ein frei einstellbarer Durchfluss durch das Produktventil 2 erreicht werden.

Da die Rückstellfeder 46 des zweiten magnetischen Antriebes 4 weniger stark ist, als die Vorspannfeder 36 des ersten magnetischen Antriebes 3, kann der Arbeitspunkt des zweiten magnetischen Antriebes 4 entsprechend so festgelegt werden, dass ein problemloses und kontinuierliches Positionieren des Ventilkörpers 20 bei geringem Energieaufwand ermöglicht wird.

Figur 2 zeigt schematisch die Position des Läufers 40, wobei dadurch auch die Position des Ventilkörpers 20 gezeigt ist. Mittels eines ersten Hubes H1 wird die Position des Läufers beim Schalten des ersten magnetischen Antriebs 3 von der geschlossenen Position in eine erste geöffnete Position, welche hier die vollständig geöffnete Position ist, bewirkt. Der erste magnetische Antrieb 3 der Figur 1 kann entsprechend nur ein vollständiges Öffnen beziehungsweise ein vollständiges Schließen des Produktventils 2 bewirken.

Ausgehend von der vollständig geöffneten Position des Produktventils 2 kann der zweite magnetische Antrieb 4 dann entsprechend ein Absenken des Ventilkegels 20 in Richtung des Ventilsitzes 22 dadurch erreichen, dass die magnetische Spule 42 mit einem entsprechenden Strom beaufschlagt wird. Je höher der Strom in der magnetischen Spule 42, desto weiter die Absenkung des Ventilkörpers 20 in den Ventilsitz 22 und damit desto kleiner der Füllproduktstrom.

Entsprechend wird das in Figur 2 gezeigte Bewegungsprofil auch als substrahierender Aufbau bezeichnet, da der erste magnetische Antrieb 3 im ersten Hub H1 ein vollständiges Öffnen des Produktventils 2 ermöglicht, und daraufhin der zweite magnetische Antrieb 4 mit dem Hub H2 eine kontinuierliche Reduzierung des Füllproduktstroms ausgehend von der vollständigen Öffnung bereitgestellt. Durch die kontinuierliche Bewegung des Ventilkörpers 20 relativ zum Ventilsitz 22 wird so ermöglicht, dass eine beliebige stetige Füllkurve abgebildet werden kann.

Vorteilhaft an der in den Figuren 1 und 2 gezeigten Ausbildung ist, dass der Energiebedarf im vollständig geöffneten Zustand, also dem Zustand, in welchem eine große Produktmenge durch das Produktventil 2 hindurchfließt, sehr gering ist, da sich der Läufer 30 im voll angezogenen Zustand befindet und entsprechend nur ein relativ geringer Haltestrom aufgewendet werden muss. Der zweite Antrieb 4 ist dann stromlos.

Ebenso ist in dem in den Figuren 1 und 2 gezeigten Ausführungsbeispiel ein vollständiges Verschließen des Produktventils 2 dadurch möglich, dass sowohl die magnetische Spule 42 des zweiten magnetischen Antriebes 4 als auch die magnetische Spule 32 des ersten magnetischen Antriebes 4 stromlos geschaltet werden. Die Vorspannfeder 36 sorgt dann dafür, dass der Läufer 30 in die geschlossene Position bewegt wird. Über den Flansch 28 wird entsprechend auch das Gestänge 26 und mit ihm der Ventilkörper 20 in die geschlossene Position bewegt.

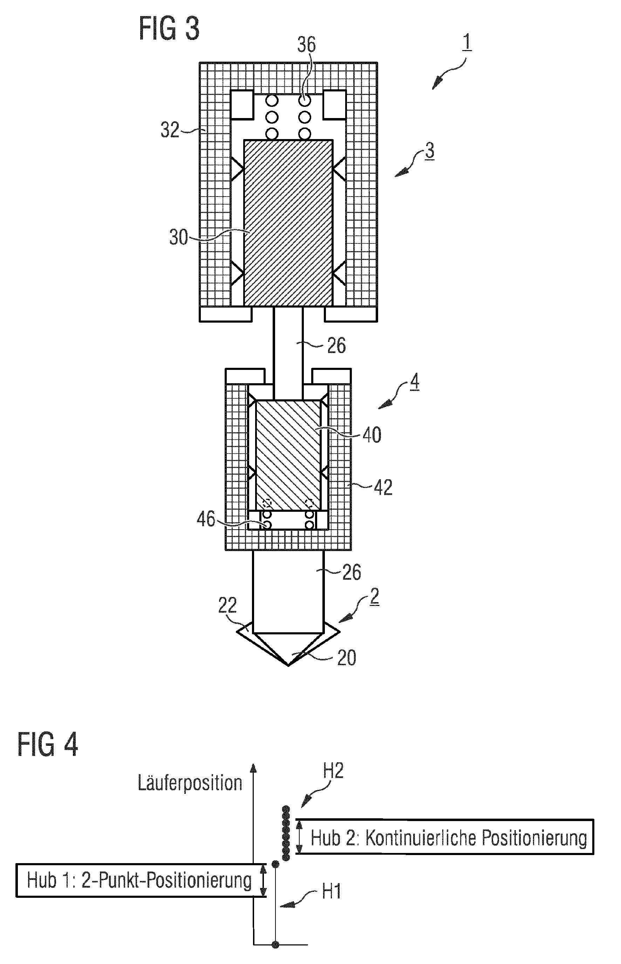

Figur 3 zeigt eine weitere Vorrichtung 1 in einer schematischen Darstellung. Ein erster magnetischer Antrieb 3 ist vorgesehen, welcher auf das mit dem Ventilkörper 20 verbundene Gestänge 26 wirkt. Der erste Antrieb 3 weist wiederum einen Läufer 30, eine den Läufer konzentrisch umgebende magnetische Spule 32 sowie eine Vorspannfeder 36 auf. Ein zweiter magnetischer Antrieb 4 ist ebenfalls vorgesehen, welcher ebenfalls einen Läufer 40 sowie eine den Läufer 40 umgebende magnetische Spule 42 und eine Rückstellfeder 46 umfasst.

In der in Figur 3 gezeigten Ausführungsform handelt es sich um eine sogenannte addierende Ausbildung, bei welcher mit dem ersten magnetischen Antrieb 3 eine Positionierung des Ventilkörpers 20 derart durchgeführt wird, dass zunächst eine Zwischenposition erreicht wird. Der erste magnetische Anrieb 3 ist hier wiederum dazu vorgesehen, diskret von einer ersten, vollständig geschlossenen Position, in eine zweite Position, welche hier die Zwischenposition ist, bewegt zu werden. Ausgehend von dieser Zwischenposition, welche über den ersten magnetischen Antrieb 3 erreicht wird, kann eine weitere Öffnung des Produktventils 2 und damit ein weiteres Abheben des Ventilkörpers 20 aus dem Ventilsitz 22 durch Betätigung des zweiten magnetischen Antriebes 4 erreicht werden. Der zweite magnetische Antrieb 4 ermöglicht wiederum eine kontinuierliche Positionierung des Ventilkörpers 20, derart, dass beliebige Füllgeschwindigkeiten am Produktventil 2 durch die entsprechende Einstellung eines die Spule 42 des zweiten magnetischen Antriebes 4 beaufschlagenden Stromes eingestellt werden können.

Figur 4 zeigt schematisch das Bewegungsprofil, wobei der erste Hub H1 wiederum durch den ersten magnetischen Antrieb 3 aufgebracht wird und der danach angeordnete zweite Hub H2, welcher eine kontinuierliche Positionierung ermöglicht, ausgehend von der erreichten Position im ersten Hub H1 erreicht wird.

Die Vorspannfeder 36 muss, um ein vollständiges Schließen des Produktventils 2 zu erreichen, die Rückstellfeder 46 überdrücken können. Entsprechend ist die Differenz aus den beiden aufgebrachten Federkräften ausschlaggebend für die Schließkraft des Produktventils 2.

Aufgrund der nun möglichen kontinuierlichen Einstellung der Durchflussmenge durch das Produktventil 2 wird es ermöglicht, unterschiedliche stetige Füllprofile zu benutzen.

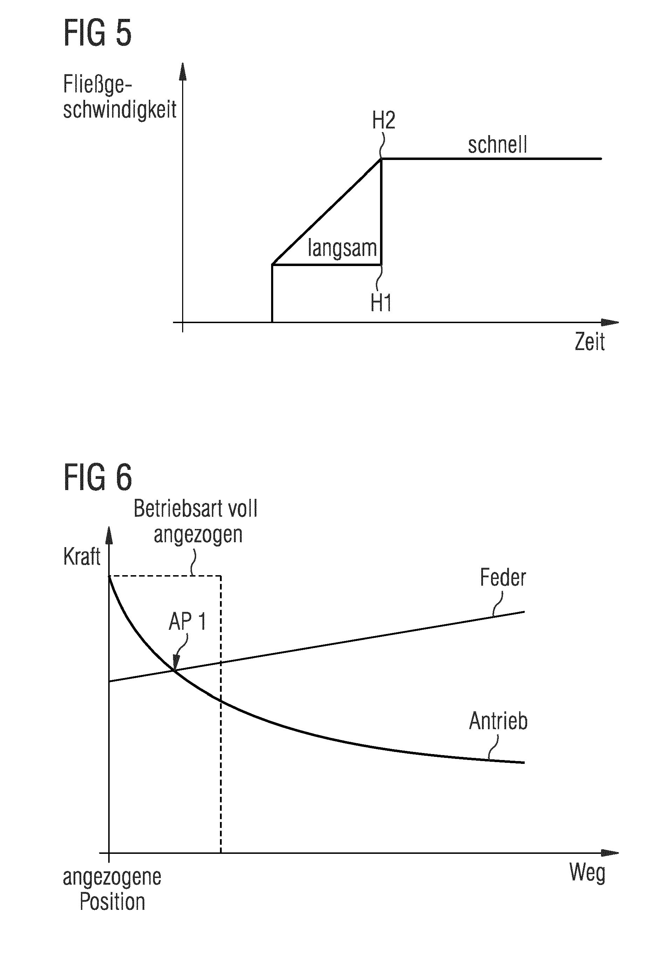

In Figur 5 ist schematisch ein Füllprofil gezeigt, bei welchem zunächst der aus dem Stand der Technik bekannte Fall gezeigt ist, in welchem zunächst eine Fließgeschwindigkeit bei zwei diskreten Zuständen H1 und H2 gezeigt ist. Die entsprechende gestufte Füllkurve ist die Füllkurve, welche üblicherweise aus dem Stand der Technik bekannt ist.

Durch die Verwendung der erfindungsgemäßen Vorrichtung wird es nun möglich, mittels des zweiten magnetischen Antriebs eine kontinuierliche Positionierung zu erreichen. Beispielsweise kann die Fließgeschwindigkeit beziehungsweise Füllgeschwindigkeit stetig gesteigert werden, im in Figur 5 gezeigten Beispiel durch ein kontinuierliches, lineares Verstellen der Position des Ventilkörpers im Ventilsitz. Entsprechend kann die unter der Kurve angeordnete schraffierte Fläche durch die oben beschriebene Vorrichtung 1 zusätzlich in der gegebenen Zeit gefüllt werden, so dass die beschriebene Vorrichtung entsprechend ein effizientes Befüllen bei reduzierter Schaumbildung erreicht.

Damit kann durch das proportional betreibbare Produktventil, welches mittels des zweiten magnetischen Antriebs kontinuierlich positionierbar ist, gleichzeitig aber aufgrund des ersten magnetischen Antriebs eine hohe Schließkraft bereitstellt, der gesamte Füllvorgang effizienter betrieben werden. So kann der Füllvorgang entweder früher beendet werden, eine Leistungserhöhung in der jeweiligen Getränkeabfüllanlage kann erreicht werden, oder aber die jeweiligen Maschinen können verkleinert werden.

In Figur 6 ist schematisch ein Kraft-Weg Diagramm für den ersten magnetischen Antrieb gezeigt, welches für den ersten magnetischen Antrieb einen Arbeitspunkt AP1 zeigt. Entsprechend wird in der voll angezogenen Betriebsart eine hohe Anzugskraft des Antriebes erreicht, so dass im voll angezogenen Zustand entsprechend nur ein geringer Haltestrom notwendig ist. Beim Ausschalten des Antriebs durch Ausschalten der Bestromung der entsprechenden Spule kann entsprechend ein schnelles Umschalten beziehungsweise Schließen des Produktventils erreicht werden, unter Aufbringen eines hohen Federdruckes der Vorspannfeder 36.

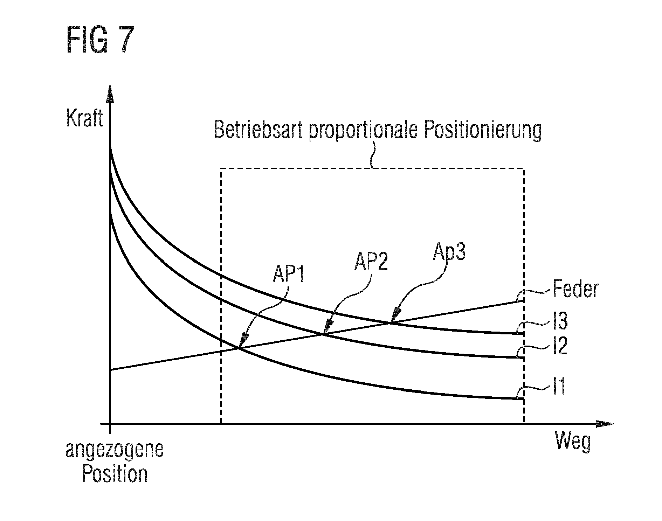

In Figur 7 ist hingegen schematisch die Bereitstellung von Arbeitspunkten für den zweiten magnetischen Antrieb gezeigt, wobei die hier auszunutzenden Arbeitspunkte in einem flacheren Bereich der Antriebskennlinie anzuordnen ist. Entsprechend können durch eine Variation der Ströme I1, I2 und I3, welche durch die magnetische Spule hindurchtreten, unterschiedliche Arbeitspunkte AP1, AP2, AP3 auf dem Kraft-Weg Diagramm angefahren werden. Durch eine entsprechende Bestromung der magnetischen Spule kann entsprechend ein kontinuierlich einstellbarer Stellweg erreicht werden, derart, dass jede beliebige Durchflussrate erreicht wird.

Durch die Aufteilung des Antriebes in einen ersten magnetischen Antrieb und einen zweiten magnetischen Antrieb kann entsprechend ein sehr feinfühliges kontinuierliches Einstellen erreicht werden, wobei gleichzeitig eine hohe Schließkraft durch den ersten magnetischen Antrieb erreicht werden kann.

Um den ersten magnetischen Antrieb 3 sowie den zweiten magnetischen Antrieb 4 gezielt ansteuern zu können, ist eine Ansteuerelektronik vorgesehen, wobei das proportionale Ansteuern der Positionen mit dem zweiten magnetischen Antrieb 4 beispielsweise über die Einprägung entsprechender Ströme erreicht wird. Diese Stromeinprägung kann mit Hilfe einer PWM-Elektronik (Puls-Weiten-Modulation) erreicht werden. Ein solches PWM-Modul kann unmittelbar in das hier nicht gezeigte Gehäuse der Vorrichtung 1 integriert werden, so dass ein in sich abgeschlossenes mechatronisches System geschaffen wird. Dies ist insbesondere im Fehlerfall von Vorteil, da die gesamte Vorrichtung 1 dann ausgetauscht werden kann, und eine langwierige Fehlersuche nach möglichen elektronischen Fehlern entsprechend vermieden werden kann.

Durch die vorgeschlagene Vorrichtung können je nach Flaschengröße und Produkt angepasste Fließgeschwindigkeiten gewährleistet werden, um die Prozesszeiten einhalten zu können und qualitativ hochwertige Füllungen zu erzeugen. Insbesondere muss, um große Flaschen zu befüllen, eine entsprechend hohe Fließleistung erreicht werden. Mit einer solchen hohen Fließleistung können jedoch nicht alle Behälter, und insbesondere nicht kleinere Behälter, beaufschlagt werden. Aufgrund der vorgeschlagenen kontinuierlichen Einstellung beziehungsweise kontinuierlichen Positionierung des Produktventilkörpers in dem Ventilsitz kann so entsprechend für jede beliebige Flaschenform und jedes beliebige Flaschenvolumen unter Berücksichtigung des jeweiligen Füllproduktes eine optimierte Füllkurve erreicht werden.

Weiterhin ist es möglich, zwischen dem vorgeschlagenen, kontinuierlich beziehungsweise proportional einstellbaren Produktventil und einem entsprechenden Durchflussmesser beziehungsweise einer Wägezelle einen entsprechenden Rückkopplungsmechanismus bereitzustellen, derart, dass die einzelnen Produktventile mit ihrer jeweiligen Ansteuerung vereinheitlich gegeneinander abgeglichen werden können, um so eine vereinfachte Anlagensteuerung und eine gleichmäßige Leistung an jedem Füllorgan zu erreichen.

### Bezugszeichenliste

- 1: Vorrichtung zum Befüllen eines Behälters mit einem Füllprodukt
- 2: Produktventil
- 20: Ventilkörper
- 22: Ventilsitz
- 24: Auslauföffnung
- 26: Gestänge
- 28: Flansch
- 3: erster magnetischer Antrieb
- 30: Läufer
- 32: magnetische Spule
- 34: Luftspalt
- 36: Vorspannfeder
- 38: Steg
- 300: Hohlraum
- 320: Durchgangsbohrung
- 4: zweiter magnetischer Antrieb
- 40: Läufer
- 42: magnetische Spule
- 44: Luftspalt
- 46: Rückstellfeder
- 48: Steg

- H1: Hub des ersten magnetischen Antriebs
- H2: Hub des zweiten magnetischen Antriebs

- AP1: Arbeitsposition
- AP2: Arbeitsposition
- AP3: Arbeitsposition

- I1: erster Strom
- I2: zweiter Strom
- I3: dritter Strom

## Patentansprüche

1. Vorrichtung (1) zum Befüllen eines Behälters mit einem Füllprodukt, bevorzugt zum Befüllen eines Behälters mit einem Getränk in einer Getränkeabfüllanlage, umfassend ein Produktventil (2) mit einem relativ zu einem Ventilsitz (22) beweglichen Ventilkörper (20) zum Steuern des Füllproduktstromes in den zu befüllenden Behälter, und einen ersten magnetischen Antrieb (3) zur Positionierung des Ventilkörpers (20) in einer geöffneten Position,
**gekennzeichnet durch**
einen zweiten magnetischen Antrieb (4) zur kontinuierlichen Positionierung des Ventilkörpers (20).

2. Vorrichtung (1) gemäß Anspruch 1, **dadurch gekennzeichnet, dass** der zweite magnetische Antrieb (4) zur kontinuierlichen Positionierung des Ventilkörpers ausgehend von der geöffneten Position ausgebildet ist.

3. Vorrichtung (1) gemäß Anspruch 1 oder 2, **dadurch gekennzeichnet, dass** der zweite magnetische Antrieb (4) einen Läufer (40) aufweist, welcher im Wirkbereich einer magnetischen Spule (42) angeordnet ist, bevorzugt konzentrisch zu der magnetischen Spule (42) angeordnet ist, sowie eine auf den Läufer (40) wirkende Rückstellfeder (46) aufweist, welche den Läufer (40) bevorzugt in die geöffnete Position des ersten magnetischen Antriebs (3) vorspannt.

4. Vorrichtung (1) gemäß einem der vorstehenden Ansprüche, **dadurch gekennzeichnet, dass** der zweite magnetische Antrieb (4) als Proportionalantrieb ausgebildet ist.

5. Vorrichtung (1) gemäß einem der vorstehenden Ansprüche, **dadurch gekennzeichnet, dass** der erste magnetische Antrieb (3) genau zwei diskrete Positionen bereitstellt, bevorzugt die geöffnete Position sowie eine geschlossene Position, in welcher das Produktventil (2) geschlossen ist.

6. Vorrichtung (1) gemäß einem der vorstehenden Ansprüche, **dadurch gekennzeichnet, dass** der erste magnetische Antrieb (3) einen Läufer (30) aufweist, welcher im Wirkbereich einer magnetischen Spule (32) angeordnet ist, bevorzugt konzentrisch zu der magnetischen Spule (32) angeordnet ist, sowie eine auf den Läufer (30) wirkende Vorspannfeder (36), welche den Läufer (30) bevorzugt in die geschlossene Position des Produktventils (2) vorspannt.

7. Vorrichtung (1) gemäß Anspruch 6, **dadurch gekennzeichnet, dass** die Vorspannfeder (36) des ersten magnetischen Antriebes (3) und eine Rückstellfeder (46) des zweiten magnetischen Antriebes (4) in entgegensetzte Richtungen vorgespannt sind und bevorzugt die Vorspannfeder (36) des ersten magnetischen Antriebes (3) eine höhere Vorspannung aufbringt, als die Rückstellfeder (46) des zweiten magnetischen Antriebes (4).

8. Vorrichtung (1) gemäß einem der vorstehenden Ansprüche, **dadurch gekennzeichnet, dass** der erste magnetische Antrieb (3) ein vollständiges Öffnen des Produktventils (2) ermöglicht und mittels des zweiten magnetischen Antriebs (4) der Ventilkörper (20) ausgehend von der vollständig geöffneten Position kontinuierlich positionierbar ist, bevorzugt kontinuierlich in eine weiter geschlossene Position bewegbar ist.

9. Vorrichtung (1) gemäß einem der Ansprüche 1 bis 7, **dadurch gekennzeichnet, dass** der erste magnetische Antrieb (3) ein Öffnen des Produktventils (2) in eine Zwischenposition ermöglicht und mittels des zweiten magnetischen Antriebs (4) der Ventilkörper (20) ausgehend von dieser Zwischenposition kontinuierlich positionierbar ist und bevorzugt kontinuierlich in eine weiter geöffnete Position bewegbar ist.

10. Vorrichtung (1) gemäß einem der vorstehenden Ansprüche, **dadurch gekennzeichnet, dass** der erste magnetische Antrieb (3) und der zweite magnetische Antrieb (4) jeweils auf das Produktventil (2) wirken und bevorzugt miteinander in Wirkverbindung stehen.

11. Vorrichtung (1) gemäß einem der vorstehenden Ansprüche, **dadurch gekennzeichnet, dass** eine Steuerelektronik zur Ansteuerung des ersten magnetischen Antriebes (3) und/oder des zweiten magnetischen Antriebes (4) in einem Gehäuse der Vorrichtung (1) aufgenommen ist.

12. Verfahren zum Befüllen eines Behälters mit einem Füllprodukt, bevorzugt zum Befüllen eines Behälters mit einem Getränk in einer Getränkeabfüllanlage, umfassend das Betätigen eines Produktventils (2) mit einem relativ zu einem Ventilsitz (22) beweglichen Ventilkörper (20) zum Steuern des Füllproduktstromes in den zu befüllenden Behälter, wobei der Ventilkörper (20) mittels eines ersten magnetischen Antriebes (3) in eine geöffnete Position gebracht wird,
**dadurch gekennzeichnet, dass**
der Ventilkörper (20) mittels eines zweiten magnetischen Antriebes (4) kontinuierlich positioniert wird.

13. Verfahren gemäß Anspruch 12, **dadurch gekennzeichnet, dass** mittels des ersten magnetischen Antriebes (3) der Ventilkörper (20) in eine vollständig geöffnete Position gebracht wird und der Ventilkörper (20) ausgehend von der vollständig geöffneten Position mittels des zweiten magnetischen Antriebs (4) kontinuierlich positioniert wird und bevorzugt kontinuierlich in eine weiter geschlossene Position bewegt wird.

14. Verfahren gemäß Anspruch 12, **dadurch gekennzeichnet, dass** mittels der ersten magnetischen Vorrichtung (3) der Ventilkörper (20) in eine Zwischenstellung gebracht wird und der Ventilkörper (20) ausgehend von der Zwischenstellung mittels der zweiten magnetischen Vorrichtung (4) kontinuierlich positioniert wird und bevorzugt kontinuierlich in eine weiter geöffnete Position bewegt wird.

15. Verfahren gemäß einem der vorstehenden Ansprüche 12 bis 14, **dadurch gekennzeichnet, dass** eine vorgegebene Füllproduktstromkurve, insbesondere mit stetig ansteigenden beziehungsweise stetig abfallenden Füllproduktströmen, zur Befüllung des Behälters durchfahren wird.

## Claims

1. A device (1) for filling a container with a filling product, preferably for filling a container with a beverage in a beverage filling line, comprising a product valve (2) with a valve body (20) movable relative to a valve seat (22) for controlling the filling product flow into the container to be filled, and a first magnetic drive (3) for positioning the valve body (20) in an open position, **characterised by**
a second magnetic drive (4) for continuous positioning of the valve body (20).

2. The device (1) according to claim 1, **characterised in that** the second magnetic drive (4) is formed for continuous positioning of the valve body starting from the open position.

3. The device (1) according to claim 1 or 2, **characterised in that** the second magnetic drive (4) has a rotor (40) which is arranged within the operating range of a magnetic coil (42), preferably concentrically with the magnetic coil (42), and a return spring (46) acting on the rotor (40), which pre-tensions the rotor (40) preferably in the open position of the first magnetic drive (3).

4. The device (1) according to one of the preceding claims, **characterised in that** the second magnetic drive (4) is developed as a proportional drive.

5. The device (1) according to one of the preceding claims, **characterised in that** the first magnetic drive (3) provides precisely two discrete positions, preferably the open position and a closed position in which the product valve (2) is closed.

6. The device (1) according to one of the preceding claims, **characterised in that** the first magnetic drive (3) has a rotor (30) which is arranged within the operating range of a magnetic coil (32), preferably concentrically with the magnetic coil (32), and a pre-tensioning spring (36) acting on the rotor (30), which pre-tensions the rotor (30) preferably in the closed position of the product valve (2).

7. The device (1) according to claim 6, **characterised in that** the pre-tensioning spring (36) of the first magnetic drive (3) and a return spring (46) of the second magnetic drive (4) are pre-tensioned in opposite directions and preferably the pre- tensioning spring (36) of the first magnetic drive (3) applies a higher pre- tensioning than the return spring (46) of the second magnetic drive (4).

8. The device (1) according to any of the preceding claims, **characterised in that** the first magnetic drive (3) enables a complete opening of the product valve (2) and by means of the second magnetic drive (4) the valve body (20) starting from the fully open position is continuously positionable, preferably continuously movable into a further closed position.

9. The device (1) according to one of claims 1 to 7, **characterised in that** the first magnetic drive (3) enables an opening of the product valve (2) in an intermediate position and by means of the second magnetic drive (4) the valve body (20) starting from this intermediate position is continuously positionable and preferably continuously movable into a further open position.

10. The device (1) according to one of the preceding claims, **characterised in that** the first magnetic drive (3) and/or the second magnetic drive (4) act respectively on the product valve (2) and preferably are in working connection with each other.

11. The device according to one of the preceding claims, **characterised in that** control electronics for controlling the first magnetic drive (3) and/or the second magnetic drive (4) are accommodated in a housing of the device (1).

12. A method for filling a container with a filling product, preferably for filling a container with a beverage in a beverage filling line, comprising the operation of a product valve (2) with a valve body (20) movable relative to the valve seat (22) for controlling the filling product flow into the container to be filled, wherein the valve body (20) is brought into an open position by means of a first magnetic drive (3),
**characterised in that**
the valve body (20) is continuously positioned by means of a second magnetic drive (4).

13. The method according to claim 12, **characterised in that** by means of the first magnetic drive (3) the valve body (20) is brought into a fully open position and the valve body (20), starting from the fully open position, is continuously positioned by means of the second magnetic drive (4) and is preferably continuously moved into a further closed position.

14. The method according to claim 12, **characterised in that** by means of the first magnetic device (3) the valve body (20) is brought into an intermediate position and the valve body (20), starting from the intermediate position, by means of the second magnetic device (4) is continuously positioned and preferably continuously moved into a further open position.

15. The method according to one of preceding claims 12 to 14, **characterised in that** a specified filling product flow curve, in particular with constantly increasing or constantly decreasing filling product flows, is followed for filling the container.

## Revendications

1. Dispositif (1) pour remplir un récipient avec un produit de remplissage, de préférence pour remplir un récipient avec une boisson dans une installation de remplissage de boissons, comprenant une soupape de produit (2) avec un corps de soupape (20) mobile par rapport à un siège de soupape (22) pour commander le flux de produit de remplissage dans le récipient à remplir et comprenant un premier dispositif d'entraînement magnétique (3) pour positionner le corps de soupape (20) dans une position ouverte,
**caractérisé par** un deuxième dispositif d'entraînement magnétique (4) pour positionner de manière continue le corps de soupape (20).

2. Dispositif (1) selon la revendication 1, **caractérisé en ce que** le deuxième dispositif d'entraînement magnétique (4) est conçu pour positionner de manière continue le corps de soupape à partir de la position ouverte.

3. Dispositif (1) selon la revendication 1 ou 2, **caractérisé en ce que** le deuxième dispositif d'entraînement magnétique (4) comporte un induit (40) qui est agencé dans la zone d'action d'une bobine magnétique (42), de préférence de manière concentrique à la bobine magnétique (42), ainsi qu'un ressort de rappel (46) qui agit sur l'induit (40) et qui précontraint l'induit (40) de préférence dans la position ouverte du premier dispositif d'entraînement magnétique (3).

4. Dispositif (1) selon l'une des revendications précédentes, **caractérisé en ce que** le deuxième dispositif d'entraînement magnétique (4) est conçu comme un dispositif d'entraînement proportionnel.

5. Dispositif (1) selon l'une des revendications précédentes, **caractérisé en ce que** le premier dispositif d'entraînement magnétique (3) fournit exactement deux positions discrètes, de préférence la position ouverte ainsi qu'une position fermée dans laquelle la soupape de produit (2) est fermée.

6. Dispositif (1) selon l'une des revendications précédentes, **caractérisé en ce que** le premier dispositif d'entraînement magnétique (3) comporte un induit (30) qui est agencé dans la zone d'action d'une bobine magnétique (32), de préférence de manière concentrique à la bobine magnétique (32), ainsi qu'un ressort de précontrainte (36) qui agit sur l'induit (30) et qui précontraint l'induit (30) de préférence dans la position fermée de la soupape de produit (2).

7. Dispositif (1) selon la revendication 6, **caractérisé en ce que** le ressort de précontrainte (36) du premier dispositif d'entraînement magnétique (3) et un ressort de rappel (46) du deuxième dispositif d'entraînement magnétique (4) sont précontraints dans des directions opposées et, de préférence, le ressort de précontrainte (36) du premier dispositif d'entraînement magnétique (3) apporte une précontrainte plus grande que le ressort de rappel (46) du deuxième dispositif d'entraînement magnétique (4).

8. Dispositif (1) selon l'une des revendications précédentes, **caractérisé en ce que** le premier dispositif d'entraînement magnétique (3) permet une ouverture complète de la soupape de produit (2) et le corps de soupape (20) peut être positionné de manière continue à partir de la position complètement ouverte au moyen du deuxième dispositif d'entraînement magnétique (4), de préférence peut être déplacé de manière continue dans une position plus fermée.

9. Dispositif (1) selon l'une des revendications 1 à 7, **caractérisé en ce que** le premier dispositif d'entraînement magnétique (3) permet une ouverture de la soupape de produit (2) dans une position intermédiaire et le corps de soupape (20) peut être positionné de manière continue à partir de cette position intermédiaire au moyen du deuxième dispositif d'entraînement magnétique (4) , de préférence peut être déplacé de manière continue dans une position plus ouverte.

10. Dispositif (1) selon l'une des revendications précédentes, **caractérisé en ce que** le premier dispositif d'entraînement magnétique (3) et le deuxième dispositif d'entraînement magnétique (4) agissent chacun sur la soupape de produit (2) et sont de préférence en liaison active l'un avec l'autre.

11. Dispositif (1) selon l'une des revendications précédentes, **caractérisé en ce qu'**une électronique de commande est logée dans un boîtier du dispositif (1) pour commander le premier dispositif d'entraînement magnétique (3) et/ou le deuxième dispositif d'entraînement magnétique (4).

12. Procédé pour remplir un récipient avec un produit de remplissage, de préférence pour remplir un récipient avec une boisson dans une installation de remplissage de boissons, comprenant l'actionnement d'une soupape de produit (2) avec un corps de soupape (20) mobile par rapport à un siège de soupape (22) pour commander le flux de produit de remplissage dans le récipient à remplir, le corps de soupape (20) étant mis dans une position ouverte au moyen d'un premier dispositif d'entraînement magnétique (3),
**caractérisé en ce que** l'on positionne de manière continue le corps de soupape (20) au moyen d'un deuxième dispositif d'entraînement magnétique (4).

13. Procédé selon la revendication 12, **caractérisé en ce que** l'on met le corps de soupape (20) dans une position complètement ouverte au moyen du premier dispositif d'entraînement magnétique (3) et on positionne de manière continue le corps de soupape (20) à partir de la position complètement ouverte au moyen du deuxième dispositif d'entraînement magnétique (4) et de préférence on le déplace de manière continue dans une position plus fermée.

14. Procédé selon la revendication 12, **caractérisé en ce que** l'on met le corps de soupape (20) dans une position intermédiaire au moyen du premier dispositif d'entraînement magnétique (3) et on positionne de manière continue le corps de soupape (20) à partir de la position intermédiaire au moyen du deuxième dispositif d'entraînement magnétique (4) et de préférence on le déplace de manière continue dans une position plus ouverte.

15. Procédé selon l'une des revendications précédentes 12 à 14, **caractérisé en ce que** l'on suit une courbe de flux de produit de remplissage prédéterminée, notamment avec des flux de produit de remplissage augmentant de manière continue ou diminuant de manière continue, pour remplir le récipient.
